# FASCICULE DE BREVET EUROPEEN

(11) **EP 1 236 662 B1**
(45) Date de publication et mention de la délivrance du brevet: **06.10.2004**
(21) Numéro de dépôt: 02290497.3
(22) Date de dépôt: 28.02.2002
(51) Int. Cl.: B65G 17/38

(54) **Chaîne de convoyage, notanment pour les transporteurs aériens et en particulier dans des abattoirs**
Förderkette, insbesondere für Hängeförderer und insbesondere in Schlachthöfen
Conveyor chain, in particular for overhead conveyors and in particular at slaughterhouses

(30) Priorité: 01.03.2001 FR 0102834
(43) Date de publication de la demande: 04.09.2002
(73) Titulaire: Compagnie Des Transmissions Mecaniques SEDIS, 10000 Troyes (FR); SFK Meat Systems a.m.b.a., 6000 Kolding (DK)
(72) Inventeur: Darbeida, Abdelhamid, 10000 Troyes (FR); Smidt Henrik, DK 7100 VEJLE (DK)
(74) Mandataire: Jacobson, Claude

(56) Documents cités:
- DE-C- 538 532
- FR-A- 1 385 492
- US-A- 2 906 390

## Description

La présente invention concerne une chaîne de convoyage telle que définie dans le préambule de la revendication 1. Une telle chaîne est connue du document FR-A-1 385 492.

On connaît dans l'état technique des chaînes de convoyage appelées "biplan". Généralement, ce type de chaîne de convoyage est constitué d'une succession de maillons formés chacun par deux plaques parallèles et articulés selon un premier plan. Afin de conférer une souplesse à la chaîne suivant un second plan, certains des maillons sont liés l'un à l'autre par deux organes de liaison qui sont articulés selon ledit second plan. Habituellement, ces organes de liaison sont fabriqués à partir de plusieurs pièces individuelles ce qui nécessite de nombreuses opérations d'usinage et d'assemblage ainsi que des transferts des différentes pièces entre les postes d'usinage et d'assemblage augmentant de ce fait les coûts de fabrication d'une telle chaîne.

La présente invention a pour but de pallier ces inconvénients et de proposer une chaîne qui ait un faible coût de production tout en permettant un fonctionnement fiable.

A cet effet l'invention a pour objet une chaîne du type précité caractérisée en ce que les extrémités arrondies sont durcies.

Suivant des modes particuliers de réalisation l'invention peut comporter l'une ou plusieurs des caractéristiques figurant dans les revendications dépendantes 2 à 12.

L'invention sera mieux comprise à la lecture de la description qui va suivre, donnée uniquement à titre d'exemple et faite en se référant aux dessins annexés, sur lesquels :
- la figure 1 est une vue de côté partiellement en coupe d'une partie d'une chaîne selon l'invention ;
- la figure 2 est une vue de dessus partiellement en coupe de la chaîne de la figure 1;
- la figure 3 est une vue du détail III de la figure 1 à plus grande échelle.

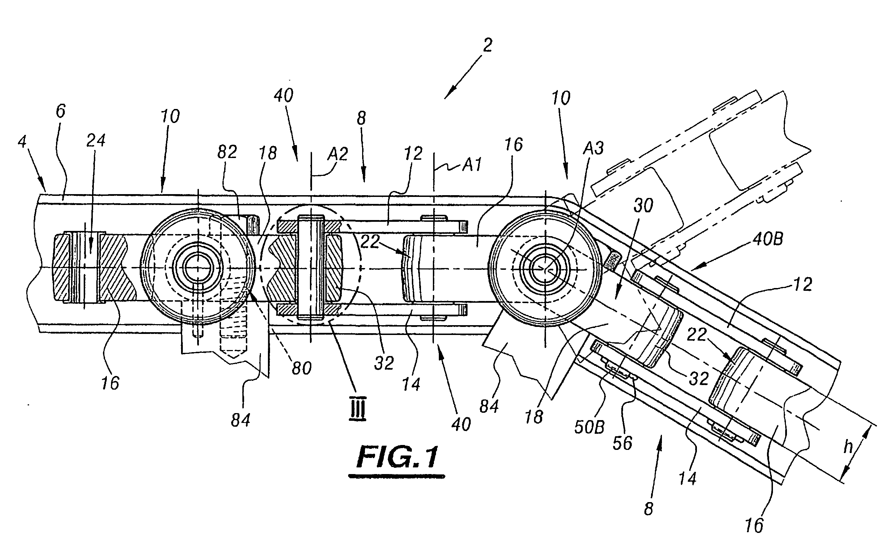

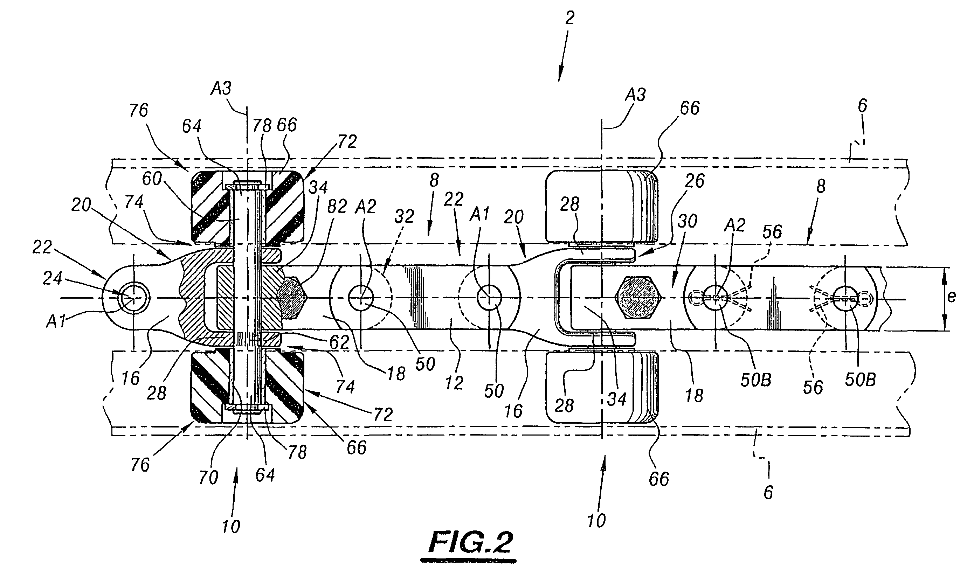

Sur les figures 1 et 2, on a représenté une chaîne de convoyage 2, notamment pour un convoyeur aérien destiné à être utilisé par exemple dans un abattoir.

Ce convoyeur aérien comporte un rail de guidage 4 formé par deux fers en C 6 dans lequel se déplace en translation la chaîne 2 qui est destinée à déplacer entre différents postes de travail situés à différents niveaux, des charges constituées par exemple par des carcasses d'animaux.

Comme représenté sur les figures 1 et 2, la chaîne de convoyage 2 est formée par une succession de maillons 8 alternés et une succession de moyens de liaison 10 de ces maillons 8.

Chaque maillon 8 est formé par une paire de plaques, respectivement 12 et 14, s'étendant parallèlement à un premier plan, qui est dans ce cas horizontal. Les moyens de liaison 10 comprennent deux organes de liaison, à savoir une fourche 16 et un organe complémentaire, en l'occurrence un bloc 18, articulés au maillon 8 voisin respectif suivant ledit premier plan selon deux axes géométriques d'articulation A1, A2 et articulés l'un à l'autre suivant un second plan selon un troisième axe géométrique d'articulation A3. Ce second plan est perpendiculaire audit premier plan, dans ce cas vertical, et s'étend le long de la chaîne 2 à l'état allongé de cette dernière.

La fourche 16 et le bloc 18 sont des pièces monoblocs fabriqués à partir d'ébauches forgées ou estampées. Le matériau de ces pièces est de préférence de l'acier carboné. En variante, ils peuvent être fabriqués en acier inoxydable ou en un matériau composite plastique comprenant des fibres, notamment des fibres de verre.

Dans le cas où le matériau des organes 16, 18 est sensible à la corrosion, ils peuvent être revêtus d'une couche anti-corrosion, par exemple en zinc.

La fourche 16 comprend une partie centrale 20 à laquelle se raccorde, côté maillon, une portion de liaison 22 au maillon voisin. Cette portion 22 est sensiblement en forme semi-cylindrique. L'axe géométrique de ce semi-cylindre est confondu avec l'axe d'articulation A1, Le diamètre de cette portion 22 correspond sensiblement à l'épaisseur e du bloc 18 (voir ci-après). De préférence, cette portion de liaison 22 est durcie sur sa surface afin de diminuer l'usure due à l'engrènement avec un pignon d'entraînement ou de renvoi (non représenté). Cette portion de liaison 22 peut être par exemple trempée. En outre, un alésage 24 est ménagé dans cette portion de liaison 22, co-axialement par rapport à l'axe A1.

La fourche 16 comprend en outre une portion 26 de liaison au bloc 18, constituée par deux branches latérales 28 s'étendant de part et d'autre du bloc 18. Les branches 28 sont disposées parallèlement par rapport au second plan. Les extrémités, côté bloc, des branches 28 sont de forme sensiblement semi-cylindrique dont l'axe est confondu avec l'axe d'articulation A3. Le diamètre du semi-cylindre correspond sensiblement à la hauteur h du bloc 18.

Le bloc 18 comprend une portion centrale 30 parallélépipédique dont la section transversale, vue suivant la longueur de la chaîne 2, est de forme carrée. La hauteur h du bloc et l'épaisseur e sont donc identiques. Côté maillon, le bloc 18 comporte une portion de liaison 32 identique à la portion de liaison 22 de la fourche 16. C'est-à-dire, cette portion est de forme sensiblement semi-cylindrique à axe géométrique confondu avec l'axe d'articulation A2 au maillon 8. L'extrémité du bloc 18, côté fourche, comporte une portion de liaison 34 semi-cylindrique dont l'axe est confondu avec le second axe d'articulation A3. Du fait que la section transversale du bloc 18 est carrée, les diamètres des portions de liaison 32, 34 sont identiques. En conséquence, les ébauches de ces organes ont un comportement identique au retrait lors du refroidissement, dans le cas où elles sont forgées.

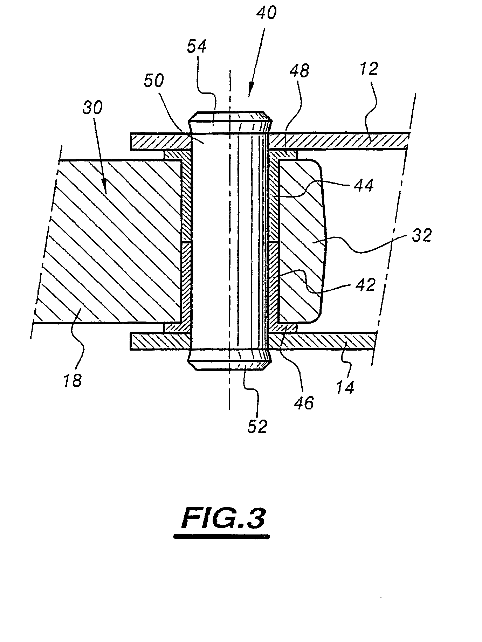

Chaque organe de liaison 16,18 est articulé au maillon 8 adjacent par une articulation désignée par la référence générale 40. Comme représenté à plus grande échelle sur la figure 3 pour le cas du bloc 18, chaque articulation 40 comprend deux douilles 42, 44 pressées d'une part et d'autre dans l'alésage de la portion de liaison respective 22, 23. Les douilles comprennent chacune un épaulement 46, 48 qui s'applique sur la surface inférieure et supérieure du bloc. Les douilles 42, 44 sont réalisées en un matériau autolubrifiant. L'articulation 40 comprend en outre une tige d'articulation 50 qui traverse les douilles 42, 44 et des alésages des plaques 12, 14. Les extrémités de la tige 50 comportent chacune un épaulement 52, 54 formé par écrasement des extrémités de la tige.

Les parties cylindriques des douilles 42, 44 lubrifient le mouvement relatif entre la tige 50 et l'organe de liaison respectif 16, 18, tandis que les épaulements 46, 48 lubrifient celui entre les plaques 12, 14 et les surfaces supérieur / inférieur de l'organe de liaison.

Une des articulations 40B comporte une tige 50B qui comporte un épaulement sur une de ses extrémités et à l'autre de ses extrémités un orifice transversal destiné au passage d'une goupille 56 pour maintenir la tige 50B sur les plaques 12, 14. Cette articulation 40B est utilisée pour relier entre elles les deux extrémités de la chaîne de convoyage 2 lors de son installation.

Chaque articulation de deux organes de liaison 16,18 est formée par une seule tige d'articulation 60 fixée sur les branches latérales 28 de la fourche 16 et traversant l'alésage de la portion 34 du bloc. En variante, une bague réalisée en un matériau autolubrifiant est disposée entre la douille et la tige 60.

Entre la portion de liaison 34 du bloc 18 et les branches 28 de la fourche, articulés l'un à l'autre, deux rondelles (non représentées) réalisées en un matériau autolubrifiant sont disposées sur la tige 60.

La tige 60 est fixé sur les branches 28 de la fourche 16 par ajustement serré. Avantageusement, la tige 60 comporte une partie moletée 62 à l'emplacement de cet ajustement.

La tige 60 comporte deux portions en saillie 64 des deux côtés de la chaîne 2. Chacune des deux portions en saillie 64 comporte un galet 66 de roulement réalisé de préférence en matière plastique, par exemple en polyamide 6, et une bague 70 réalisée en un matériau autolubrifiant interposée entre chaque galet 66 et la saillie 64 correspondante.

Les galets de roulement 66 comportent une partie médiane cylindrique 72, une partie intérieure cylindrique 74 à faible diamètre et une partie extérieure 76 arrondie. Ceci permet l'engrènement du pignon d'entraînement dans les maillons.

Les galets de roulement 66 sont bloqués en translation sur la tige 60 par des rondelles fendues 78 traitées contre la corrosion et encliquetées à chaque extrémité de la tige 60 dans une gorge annulaire de ce dernier.

Afin de diminuer les frottements, des rondelles (non représentées) en un matériau autolubrifiant peuvent être interposées sur la tige 60 entre le galet 66 de roulement et la partie extérieure de la branche 28.

Il est à noter que l'axe des tiges 50 est confondu avec l'axe d'articulation A1 ou A2 du maillon 8 respectif. L'axe de la tige 60 est confondu avec l'axe d'articulation A3.

Par ailleurs, chaque bloc 18 comporte un alésage 80 dont l'axe est disposé parallèlement au second plan. Une vis hexagonale 88 est vissée dans cet alésage 80 et fait saillie vers le bas sur l'autre côté du bloc 18. Un doigt d'entraînement 84 est vissé sur cette partie saillante de la vis 82. Il est bloqué en rotation par une goupille 86 forcée dans deux trous borgnes ménagés dans le bloc 18 et dans le doigt 84. L'axe de la goupille 86 intersecte l'axe A3 et l'axe longitudinal de la chaîne 2.

D'une manière générale, la chaîne de convoyage 2 est autolubrifiante ce qui ne nécessite aucune lubrification complémentaire et les éléments de cette chaîne de convoyage sont réalisés en un matériau anticorrosion permettant son lavage par exemple au jet d'eau sous pression sans risque d'oxydation.

Ainsi, les bagues et les rondelles sont réalisées en un matériau autolubrifiant constitué par exemple d'un matériau composite comportant des fibres minérales ou organiques avec une charge solide lubrifiante.

Les composants en métal de la chaîne, autre que les organes de liaison, sont par exemple en acier trempé et zingué ou bien en acier inoxydable.

Les tiges 50, 50B, 60 sont en acier inoxydable à haute résistance ou en acier chromisé pour assurer une durée de vie élevée de la chaîne.

La chaîne de convoyage 2 selon l'invention présente l'avantage d'être facile à assembler grâce au nombre minimale de pièces et d'avoir un faible coût de production étant donné que les organes de liaison sont des pièces monobloc fabriquées par forgeage ou estampage. Leur géométrie simple est particulièrement adaptée à ce genre de procédé de fabrication.

Pendant le fonctionnement, la répartition des forces est régulière grâce à une disposition à intervalles réguliers des galets de roulement sur la longueur de la chaîne.

De plus, le pignon de renvoi (ou d'entraînement) engrenant directement sur les organes de liaison, permet de réduire les bruits produits lors de l'engrènement de ce pignon.

## Revendications

1. Chaîne de convoyage, notamment pour des convoyeurs aériens, en particulier dans des abattoirs, comprenant une succession de maillons (8) comprenant chacun une paire de plaques (12, 14) s'étendant parallèlement à un premier plan, deux maillons (8) adjacents étant articulés l'un à l'autre suivant ledit premier plan par des moyens de liaison (10), ces moyens de liaison comprenant deux organes (16, 18) articulés chacun à un desdits deux maillons (8) suivant ledit premier plan autour de premier et second axes géométriques (A1, A2) et ces deux organes étant articulés l'un à l'autre suivant un second plan autour d'un troisième axe géométrique (A3), le second plan s'étendant perpendiculairement par rapport audit premier plan et par rapport à la direction longitudinale générale de la chaîne, les deux organes comprenant une fourche (16) et un organe complémentaire (18) réalisés chacun en un seul tenant, notamment en une seule pièce, les extrémités (22, 23) de la fourche (16) et de l'organe complémentaire (18) du côté de l'articulation avec le maillon (8) adjacent étant arrondies, **caractérisée en ce que** les extrémités arrondies (22, 32) sont durcies.

2. Chaîne de convoyage selon la revendication 1, **caractérisée en ce que** l'organe complémentaire est un bloc (18) sensiblement parallélépipédique, notamment ayant une section transversale carrée.

3. Chaîne de convoyage selon la revendication 1 ou la revendications 2, **caractérisée en ce que** les extrémités arrondies (22, 23) sont en forme semi-cylindrique dont l'axe est confondu avec l'axe d'articulation (A1, A2) au maillon respectif.

4. Chaîne de convoyage selon l'une quelconque des revendications 1 à 3, **caractérisée en ce que** les extrémités arrondies (22, 23) sont trempées.

5. Chaîne de convoyage selon l'une quelconque des revendications précédentes, **caractérisée en ce que** les extrémités d'articulation (28, 34) de la fourche (16) et de l'organe complémentaire (18) entre-eux ont une forme arrondie, notamment semi-cylindrique dont l'axe est confondu avec l'axe d'articulation (A3).

6. Chaîne de convoyage selon l'une quelconque des revendications précédentes, **caractérisée en ce que** la fourche (16) et l'organe complémentaire (18) ont une même hauteur (h).

7. Chaîne de convoyage selon l'une quelconque des revendications précédentes, **caractérisée en ce que** la fourche (16) et l'organe complémentaire (18) sont fabriqués par forgeage ou estampage.

8. Chaîne de convoyage selon l'une quelconque des revendications précédentes, **caractérisée en ce que** l'organe complémentaire (18) comporte, entre ses deux axes d'articulation (A2, A3), un organe d'entraînement (84) qui coopère avec un dispositif de support d'une charge.

9. Chaîne de convoyage selon l'une quelconque des revendications précédentes, **caractérisée en ce que** les deux organes sont liés l'un à l'autre par une tige d'articulation qui comporte des portions (64) en saillie sur les deux côtés de la fourche (16), et **en ce qu'**un galet de roulement (66) tourillonne sur chacune desdites portions en saillie.

10. Chaîne de convoyage selon l'une quelconque des revendications précédentes, **caractérisée en ce que** la chaîne est autolubrifiante.

11. Chaîne de convoyage selon les revendications 3, 9 et 10 prises ensemble, **caractérisée en ce qu'**entre chacune des portions en saillie (64) de la tige d'articulation (60) et des galets de roulement (66) une bague (70) en un matériau autolubrifiant est disposée, **en ce qu'**elle comporte des tiges d'articulation (50) qui traversent les extrémités (22, 32), et **en ce qu'**entre les tiges (50) et l'extrémité associée d'articulation (22, 23) des organes (16, 18) au moins une douille (42, 44) autolubrifiante est disposée.

12. Chaîne de convoyage selon l'une quelconque des revendications précédentes, **caractérisée en ce que** les éléments composant la chaîne de convoyage (2) sont réalisés en un matériau anticorrosion permettant son lavage.

## Patentansprüche

1. Förderkette, vor allem für Hängebahnen, insbesondere in Schlachthöfen, mit einer Folge von Kettengliedern (8), wovon jedes ein Paar Platten (12, 14) umfasst, die sich parallel zu einer ersten Ebene erstrecken, wobei zwei benachbarte Kettenglieder (8) in einer ersten Ebene durch Verbindungsmittel (10) aneinander angelenkt sind, wobei diese Verbindungsmittel zwei Organe (16, 18) aufweisen, die jeweils an einem der zwei Kettenglieder (8) in der ersten Ebene um eine erste und eine zweite geometrische Achse (A1, A2) angelenkt sind und wobei diese zwei Organe in einer zweiten Ebene um eine dritte geometrische Achse (A3) aneinander angelenkt sind, wobei sich die zweite Ebene senkrecht zu der ersten Ebene und senkrecht zu der allgemeinen Längsrichtung der Kette erstreckt, wobei die zwei Organe eine Gabel (16) und ein komplementäres Organ (18) umfassen, die jeweils durchgehend und insbesondere einteilig ausgebildet sind, wobei die Enden (22, 23) der Gabel (16) und des komplementären Organs (18) auf Seiten der Anlenkung an dem benachbarten Kettenglied (8) abgerundet sind, **dadurch gekennzeichnet, dass** die abgerundeten Enden (22, 23) gehärtet sind.

2. Förderkette nach Anspruch 1, **dadurch gekennzeichnet, dass** das komplementäre Organ ein im Wesentlichen parallelepipedischer Block (18) ist, der insbesondere einen quadratischen Querschnitt hat.

3. Förderkette nach Anspruch 1 oder Anspruch 2, **dadurch gekennzeichnet, dass** die abgerundeten Enden (22, 23) die Form eines Halbzylinders haben, dessen Achse mit der Achse (A1, A2) der Anlenkung am entsprechenden Kettenglied zusammenfällt.

4. Förderkette nach einem der Ansprüche 1 bis 3, **dadurch gekennzeichnet, dass** die abgerundeten Enden (22, 23) vergütet sind.

5. Förderkette nach einem der vorhergehenden Ansprüche, **dadurch gekennzeichnet, dass** jene Enden (28, 34) der Gabel (16) und des komplementären Organs (18), an denen diese aneinander angelenkt sind, eine abgerundete, insbesondere halbzylindrische Form haben, deren Achse mit der Achse (A3) der Anlenkung zusammenfällt.

6. Förderkette nach einem der vorhergehenden Ansprüche, **dadurch gekennzeichnet, dass** die Gabel (16) und das komplementäre Organ (18) die gleiche Höhe (h) besitzen.

7. Förderkette nach einem der vorhergehenden Ansprüche, **dadurch gekennzeichnet, dass** die Gabel (16) und das komplementäre Organ (18) durch Schmieden oder Gesenkformen hergestellt sind.

8. Förderkette nach einem der vorhergehenden Ansprüche, **dadurch gekennzeichnet, dass** das komplementäre Organ (18) zwischen seinen zwei Gelenkachsen (A2, A3) ein Antriebselement (84) aufweist, das mit einer Lasthaltevorrichtung zusammenwirkt.

9. Förderkette nach einem der vorhergehenden Ansprüche, **dadurch gekennzeichnet, dass** die zwei Organe durch einen Schwenkstift miteinander verbunden sind, der Abschnitte (64) aufweist, die auf beiden Seiten der Gabeln (16) vorstehen, und dass sich um jeden der vorstehenden Abschnitte eine kleine Rolle (66) dreht.

10. Förderkette nach einem der vorhergehenden Ansprüche, **dadurch gekennzeichnet, dass** die Kette selbstschmierend ist.

11. Förderkette nach den Ansprüchen 3, 9 und 10 in Kombination, **dadurch gekennzeichnet, dass** zwischen jedem der vorstehenden Abschnitte (64) des Anlenkungsstifts (60) und den kleinen Rollen (66) ein Ring (70) aus einem selbstschmierenden Werkstoff angeordnet ist, dass sie Schwenkstifte (50) aufweist, die durch die Enden (22, 32) verlaufen, und dass zwischen den Stiften (50) und dem zugeordneten Anlenkungsende (22, 23) der Organe (16, 18) wenigstens eine selbstschmierende Hülse (42, 44) angeordnet ist.

12. Förderkette nach einem der vorhergehenden Ansprüche, **dadurch gekennzeichnet, dass** die die Förderkette (2) bildenden Elemente aus einem korrosionsbeständigen Werkstoff verwirklicht sind, die ermöglichen, sie zu waschen.

## Claims

1. Conveyor chain, especially for overhead conveyors, in particular in slaughter-houses, comprising a succession of links (8), each one comprising a pair of plates (12, 14) which extend parallel to a first plane, two adjacent links (8) being articulated to one another along said first plane by linkage means (10), these linkage means comprising two members (16, 18), each articulated to one of said two links (8) along said first plane about first and second geometric axes (A1, A2) and these two members being articulated one to another along a second plane about a third geometric axis (A3), the second plane extending perpendicularly in relation to said first plane and in relation to the general longitudinal direction of the chain, the two members comprising a fork (16) and a complementary member (18), each manufactured all in one piece, especially as a single piece, the ends (22, 23) of the fork (16) and of the complementary member (18) on the side which articulates with the adjacent link (8) being rounded, **characterised in that** the rounded ends (22, 32) are hardened.

2. Conveyor chain according to claim 1, **characterised in that** the complementary member is a block (18) which is substantially parallelepipedic and in particular has a square cross-section.

3. Conveyor chain according to claim 1 or claim 2, **characterised in that** the rounded ends (22, 23) are semi-cylindrical, the axis of which is merged with the axis of articulation (A1, A2) at the respective link.

4. Conveyor chain according to any one of claims 1 to 3, **characterised in that** the rounded ends (22, 23) are quenched. r

5. Conveyor chain according to any one of the preceding claims, **characterised in that** the articulation ends (28, 34) of the fork (16) and the complementary member (18) together have a rounded shape, in particular semi-cylindrical, the axis of which is merged with the axis of articulation (A3).

6. Conveyor chain according to any one of the preceding claims, **characterised in that** the fork (16) and the complementary member (18) are of the same height (h).

7. Conveyor chain according to any one of the preceding claims, **characterised in that** the fork (16) and the complementary member (18) are manufactured by forging or stamping.

8. Conveyor chain according to any one of the preceding claims, **characterised in that** the complementary member (18) contains, between its two articulation axes (A2, A3), a driving member (84) which cooperates with a load support device.

9. Conveyor chain according to any one of the preceding claims, **characterised in that** the two members are linked one to another by an articulation rod which includes portions (64) projecting on the two sides of the fork (16), and **in that** a conveyor roller (66) pivots on each of said projecting portions.

10. Conveyor chain according to any one of the preceding claims, **characterised in that** the chain is self-lubricating.

11. Conveyor chain according to claims 3, 9 and 10 taken together, **characterised in that** between each of the projecting portions (64) of the articulation rod (60) and of the conveyor rollers (66) is arranged a ring (70) formed from a self-lubricating material, **in that** it includes articulation rods (50) which cross the ends (22, 32), and **in that** between the rods (50) and the associated articulation end (22, 23) of the members (16, 18) is arranged at least one self-lubricating bush (42, 44).

12. Conveyor chain according to any one of the preceding claims, **characterised in that** the elements making up the conveyor chain (2) are realised in an anti-corrosion material allowing it to be washed.
